# EUROPÄISCHE PATENTSCHRIFT

(11) **EP 2 181 270 B1**
(45) Veröffentlichungstag und Bekanntmachung des Hinweises auf die Patenterteilung: **14.03.2012**
(21) Anmeldenummer: 08774322.5
(22) Anmeldetag: 26.06.2008
(51) Int. Cl.: F16C 11/06

(54) **BEFESTIGUNGSANORDNUNG FÜR EIN GELENKLAGER**
MOUNTING ARRANGEMENT FOR A HINGE BEARING
SYSTEME DE FIXATION POUR UN PALIER D'ARTICULATION

(30) Priorität: 20.08.2007 DE 102007039238
(43) Veröffentlichungstag der Anmeldung: 05.05.2010
(73) Patentinhaber: Robert Bosch GmbH, 70442 Stuttgart (DE)
(72) Erfinder: LUEDTKE, Ulrich, 76227 Karlsruhe-Durlach (DE); SUAREZ-SEMINARIO, Dariusz, 76547 Sinzheim (DE); SCHMID-SCHOENBEIN, Christian, 76185 Karlsruhe (DE)
(86) Internationale Anmeldenummer: PCT/EP2008/058138
(87) Internationale Veröffentlichungsnummer: WO 2009/024377

(56) Entgegenhaltungen:
- EP-A- 0 592 303
- EP-A- 0 821 170
- EP-A- 1 744 436
- WO-A-97/20376
- DE-A1- 2 416 878
- DE-A1-102005 030 871
- FR-A- 2 639 161
- US-A- 3 701 574
- US-A- 3 770 990

## Beschreibung

Die Erfindung betrifft eine Befestigungsanordnung für ein Gelenklager, insbesondere ein Kalottenlager, gemäß dem Oberbegriff des Anspruches 1.

### Stand der Technik

In Verbindung mit elektrischen Antrieben ist es bekannt, die Welle eines Elektromotors beidseitig zu lagern und die hierfür vorgesehenen Lager bei an ein anderes Bauteil angesetztem Motorgehäuse einerseits im Motorgehäuse und andererseits in dem mit dem Motorgehäuse verbundenen, angesetzten Bauteil anzuordnen. Dies bedingt bei Axiallagern, zum Beispiel Kugellagern, eine fluchtende Ausrichtung der Lager, und damit auch eine entsprechend exakte Ausrichtung des Motorgehäuses zum angesetzten Bauteil, ermöglicht aber einfache, zylindrische Lageraufnahmen für die Axiallager und eine einfache Fixierung der Lager zur jeweiligen Lageraufnahme, etwa durch Presssitz.

Um Fluchtungsfehler hinnehmen zu können, wie sie u.a.bei gröberen Tolerierungen in Fertigung- und Montage auftreten können, wird für das im angesetzten Bauteil vorgesehene Lager eine Ausbildung als Gelenklager mit umfangsseitig quer zur Umfangsrichtung ausgewölbten Lagerkörper vorgesehen, dem eine an die Kontur des Lagerkörpers angepasste Lageraufnahme zugeordnet wird. Dies bedingt nicht nur eine Anpassung in den Konturen, sondern insbesondere bei zum Lagerkörper halbseitiger, napfförmiger Lageraufnahme auch eine entsprechende Abstützung des Lagerkörpers quer zur Umfangsrichtung in Richtung auf die napfförmige Aufnahme und entsprechenden Zusatzaufwand.

Mit der EP-A-0821170 ist ein Elektromotor bekannt geworden, bei dem ein Kalottenlager innerhalb zweier Kapselhälften angeordnet ist, die wiederum in einem ringförmigen Kragen gelagert sind. Eine der Kapselhälften weist dabei an einem axialen Ende sich in Axialrichtung erstreckende Federzungen auf.

Die FR 2 639 161 A zeigt eine Lageranordnung, bei der ein auf einer Welle angeordnetes Gleitlager in einer Lageraufnahme eines Gehäuses angeordnet ist. Dabei wird das Gleitlager mittels eines Federelements radial und axial gegen die Lageraufnahme des Gehäuses gepresst, wobei das Federelement radial nach innen gerichtete Federzungen aufweist.

### Offenbarung der Erfindung

Der Erfindung liegt die Aufgabe zugrunde, eine Befestigungsanordnung der eingangs genannten Art im Hinblick auf eine verbesserte Handhabung, einen verringerten Aufwand und/oder erweiterte Einsatzmöglichkeiten auszugestalten.

Diese Aufgabe wird erfindungsgemäß mit den Merkmalen des Anspruches 1 gelöst. Die Unteransprüche geben zweckmäßige Weiterbildungen an.

Die erfindungsgemäße Ausbildung der Befestigungsanordnung ermöglicht eine Abstützung und/oder Führung des Lagerkörpers in der Lageraufnahme, ohne wechselseitige Anpassung zwischen den Konturen der Umfangsfläche des Lagerkörpers und der Lagerfläche der Lageraufnahme, über den Spannring, und dies je nach Ausgestaltung sowohl radial und, quer zur Umfangsrichtung, axial, wie auch lediglich axial.

Bei einer Ausgestaltung des Spannringes als axial und radial tragendes und führendes Element bildet der Spannring einen ringförmigen Trag- und Führungskäfig, der quer zur Umfangsrichtung geschlitzt und dadurch zum Einsetzen des Lagerkörpers aufspreizbar ist und der sich, axial aufgeschoben auf den Lagerkörper, gegen die seitlichen, aufgrund der Auswölbung der Umfangsfläche dachförmig gegeneinander geneigten Umfangszonen des Lagerkörpers über Stützelemente abstützt. Diese Stützelemente sind insbesondere durch zum Spannring frei geschnittene und radial nach innen angestellte Laschen gebildet, so dass - entsprechend der Verwendung federelastischen Materiales, insbesondere von Federstahl für den Spannring - neben der Aufweisbarkeit des Spannringes aufgrund dessen Schlitzung quer zur Umfangsrichtung gegebenenfalls auch die Laschen eine zusätzliche, radialelastische Nachgiebigkeit aufweisen.

Aufgrund der in Umfangsrichtung umschließenden Lage des auf den Lagerkörper aufgesetzten Spannringes, der durch den quer zur Umfangsrichtung verlaufenden Schlitz aufweitbar ist, und die radiale, insbesondere radialelastisch nachgiebige Zuordnung der Laschen zum Ringkörper des Spannringes bildet dieser zwischen Lagerkörper und Lageraufnahme ein Zwischenglied, über das eine tragende und führende Aufnahme des Lagerkörpers in der Lageraufnahme ungeachtet positiver Toleranzen möglich ist, und dies ungeachtet der taumelfähigen Abstützung des Lagerkörpers im Spannring, der seinerseits nach radial außen gegen die Lagerfläche der Lageraufnahme verspannt und dadurch quer zur Umfangsrichtung reibschlüssig abgestützt ist.

Als besonders zweckmäßig erweist sich in diesem Zusammenhang eine Ausgestaltung, bei der der Spannring umlaufend einen Tragsteg aufweist, der bei auf den Lagerkörper aufgesetztem Spannring den Lagerkörper umfangsseitig im Äquatorialbereich seiner ausgewölbten Umfangsfläche überdeckt. Hierdurch lässt sich, entsprechend der Anordnung der Laschen zum Tragsteg, eine Zentrierung des Lagerkörpers zum Spannring ohne Zusatzaufwand erreichen und es können insbesondere auch radiale Toleranzen zwischen der Lagerfläche der Lageraufnahme und der Umfangsfläche des Lagerkörpers ohne Beeinträchtigung der Führung des Tragkörpers in der Lageröffnung ausgeglichen werden. Bevorzugt stützt jedoch der Spannring den Lagerkörper radial formschlüssig gegen die Lageraufnahme ab, kann diesen bei entsprechendem radialen Spiel zwischen Lagerkörper und Lageraufnahme aber auch lediglich kraftschlüssig aufnehmen und abstützen, womit ein hinreichend breites Toleranzband für die Fertigung ohne Beeinträchtigung der Funktion abgedeckt werden kann.

Bildet bei der vorgeschilderten Ausbildung der Befestigungsanordnung der Spannring zum rotationssymmetrischen Lagerkörper in der radialen Abstützung gegenüber der Lageraufnahme ein gegebenenfalls formschlüssig abstützendes Zwischenglied, so ist im Rahmen einer weiteren Ausbildung der erfindungsgemäßen Befestigungsanordnung der Lagerkörper radial gegebenenfalls, insbesondere bevorzugt, unmittelbar radial an der Lagerfläche der Lageraufnahme abgestützt und es bildet der Spannring für den rotationssymmetrischen Lagerkörper im Wesentlichen lediglich einen Führungskäfig, in dem der Lagerkörper punktsymmetrisch abgestützt ist, so dass, bei entsprechender radialer Tolerierung des Lagerkörpers zur Lageraufnahme, der Spannring im Wesentlichen lediglich Führungsfunktion hat und radiale Kräfte direkt zwischen Lagerkörper und Lageraufnahme formschlüssig abgestützt werden.

Die erfindungsgemäße Befestigungsanordnung macht es insbesondere auch möglich, Gelenklager über den Spannring in zylindrischen Lageraufnahmen festzulegen, womit sich die Möglichkeit eröffnet, gleiche Lageraufnahmen sowohl für Radiallager, sei es in Form von Kugellagern oder Gleitlagern, wie auch für Gelenklager vorzusehen, so dass entsprechende, die Lageraufnahme enthaltende Bauteile sowohl für Radiallager wie für Gelenklager Verwendung finden können, womit insbesondere auch die Möglichkeit geschaffen wird, solche Lager im Bedarfsfalle, beispielsweise im Rahmen von Reparaturen, im Austausch einzusetzen, falls die Reparatur beispielsweise durch einen entsprechenden Fluchtungsfehler bedingt ist.

Weitere Vorteile und zweckmäßige Ausführungen sind den Ansprüchen, der Figurenbeschreibung und den Zeichnungen zu entnehmen. Es zeigen:
- Fig. 1: in vereinfachter Schnittdarstellung einen Ausschnitt, in dem zu einem Gehäuse eines Bauteiles in Form eines anzutreibenden Aggregates als Anbauteil ein das Aggregat antreibender Motor vorgesehen ist, dessen Welle einerseits im Aggregatgehäuse und andererseits im Motorgehäuse gelagert ist,
- Fig. 2 bis 4: in verschiedenen Ansichten die Teile einer nicht erfindungsgemäßen Befestigungsanordnung, über die das endseitig zur Welle vorgesehene Gelenklager in einer Lageraufnahme des Motorgehäuses fixiert ist, sowie
- Fig. 5 bis 7 Fig. 5 bis 7: eine Ausbildung der erfindungsgemäßen Befestigungsanordnung für das Gelenklager in den Fig. 2 bis 4 weitgehend entsprechenden Einzeldarstellungen.

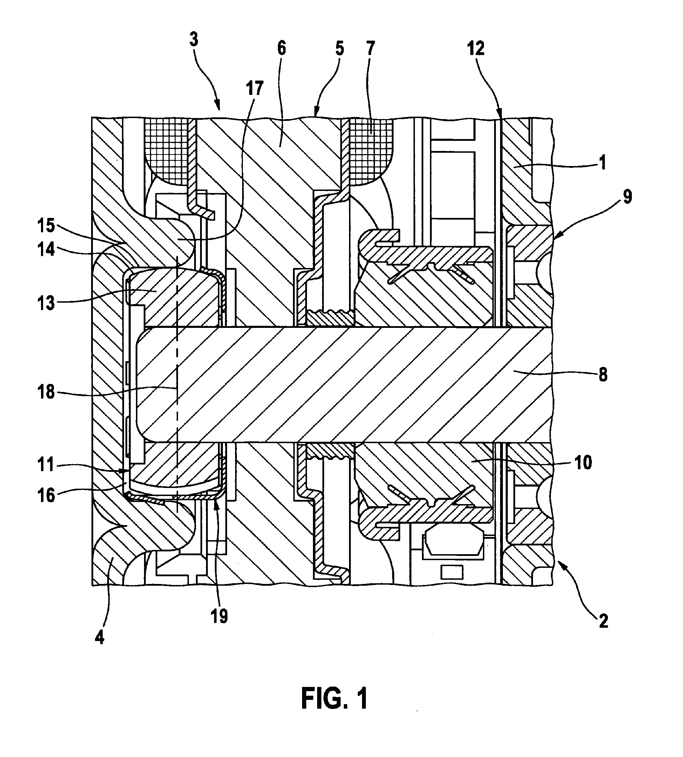

Der in Fig. 1 gezeigte Zeichnungsauschnitt zeigt seitlich angeflanscht zu einem Gehäuse 1 - so beispielsweise dem Gehäuse 1 eines anzutreibenden Aggregates 2, etwa eines Getriebes - den zugeordneten Antriebsmotor 3, der in einem, was im Einzelnen nicht gezeigt ist, kappenartigen Motorgehäuse 4 angeordnet ist, das mit seinem Krempenteil gegen das Gehäuse 1 fixiert ist. Von dem als Elektromotor ausgebildeten Antriebsmotor 3 ist der Anker 5 mit seinem Träger 6 für die Ankerwicklung 7 teilweise gezeigt. Der Träger 6 des Ankers 5 ist drehfest zur Motorwelle 8, die ihrerseits sowohl im Motorgehäuse 4 als auch im Gehäuse 1 des Aggregates 2 gelagert ist, an das das Motorgehäuse 4 angesetzt ist. Im Übergang zwischen dem Träger 6 des Ankers 5 und dem Lager 9, über das die Motorwelle 8 im Gehäuse 1 des Aggregates 2 gelagert ist, ist der Kommutator 10 angeordnet und am freien, motorseitig auslaufenden Ende ist die Welle 8 im Motorgehäuse 4 über ein Lager 11 geführt, so dass die Lager 9 und 11 beiderseits der Verbindungsebene 12 des Gehäuses 1 des Aggregates 2 zum Motorgehäuse 4 liegen, womit eventuelle fertigungs- und/oder montagebedingte Toleranzen in der Zuordnung der Gehäuse 1 und 4 zu Fluchtungsfehlern der Lager 9 und 11 führen. Insbesondere im Hinblick auf solche Fluchtungsfehler, auch in Bezug auf einen möglichst einfachen Aufbau, ist das Lager 11, in dem das freie Ende der Motorwelle 8 geführt ist, als Gelenklager ausgebildet, bevorzugt in Form eines Gleitlagers, dessen zum Gehäuse 4 stehender, also nicht drehender Lagerkörper eine quer zur Umfangsrichtung ballige, also gewölbte Umfangsfläche 14 aufweist.

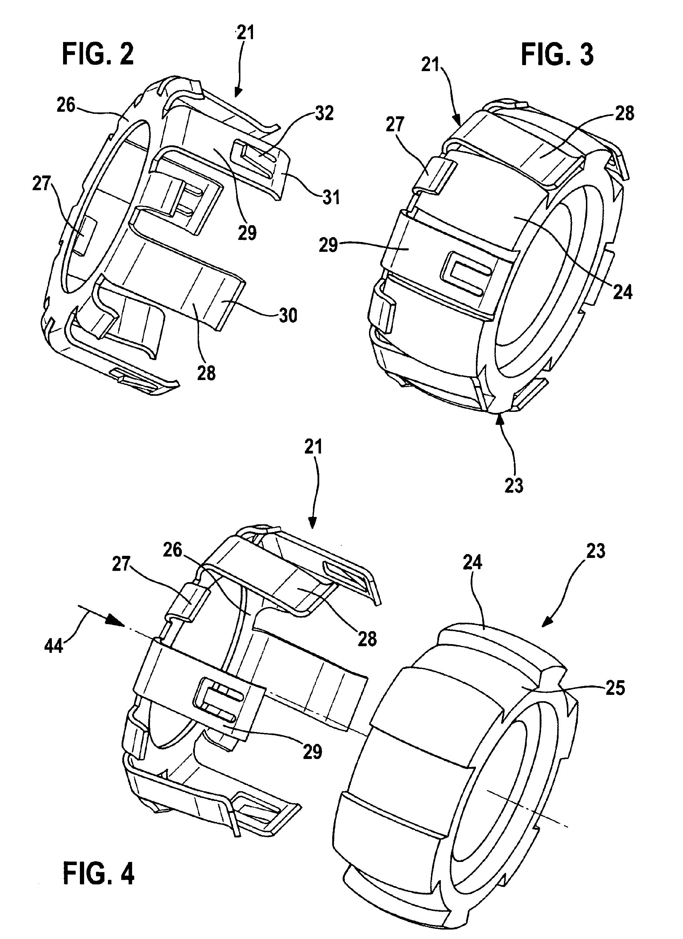

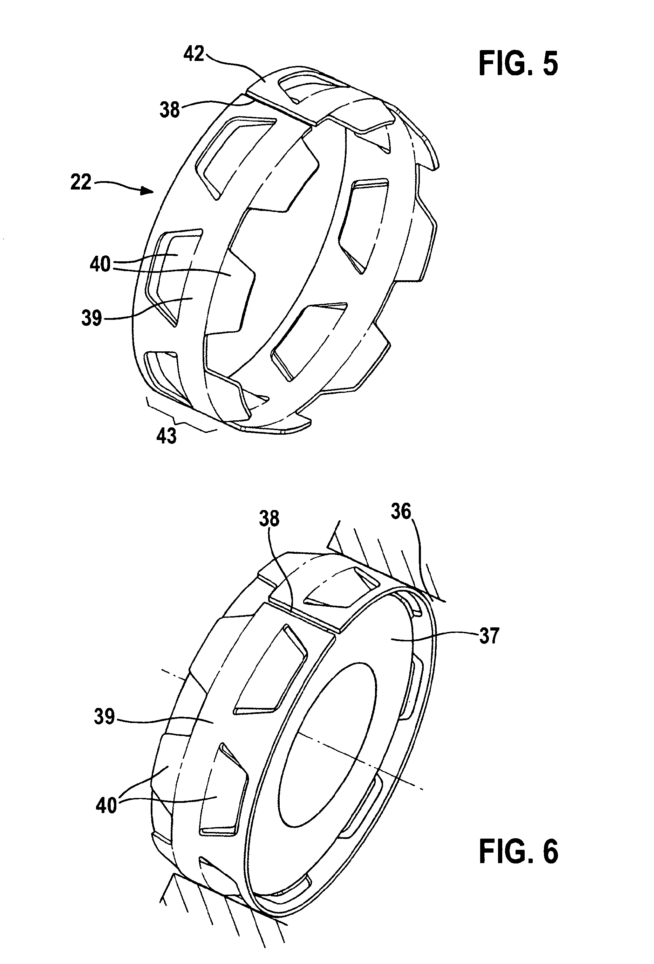

Angeordnet ist der Lagerkörper 13 in einer diesen axial teilweise überdeckenden und umfangsseitig mit seiner Lagerfläche 15 umschließenden Lageraufnahme 16, die dem Boden des napfförmigen Motorgehäuses 4 zugeordnet ist und die sich als axiale, zur Welle 8 hin offene, napfförmige Aufnahme darstellt. Die Umfangswand 17 der napfförmigen Lageraufnahme 16 erstreckt sich umfangsseitig umschließend axial etwas über die Äquatorialebene 18 des Lagerkörpers 13 hinausragend, so dass der Lagerkörper 13 mit seiner Umfangsfläche 14 zumindest über den größeren Teil deren axialer Breite von der Lagerfläche 15 der Lageraufnahme 16 umschlossen ist. Zur Abstützung und/oder Führung des Lagerkörpers 13 des Gelenklagers 11 in der Lageraufnahme 16 ist ein nicht erfindungsgemäßer Spannring 19 vorgesehen, dessen grundsätzliche Anordnung aus Fig. 1 ersichtlich ist. Die Fig. 2 bis 7 zeigen für einen solchen Spannring 19 unterschiedliche Ausführungsformen, in denen bezogen auf die Fig. 2 bis 4 der nicht erfindungsgemäße Spannring mit 21 und bezogen auf die Fig. 5 bis 7 der erfindungsgemäße Spannring mit 22 bezeichnet ist, wobei für die Erläuterungen zu Fig. 2 bis 7 auf die Darlegungen zu Fig. 1 und teilweise auch auf die dort verwendeten Bezugszeichen zurückgegriffen wird und in Fig. 1 der Spannring 19 in einer den Fig. 2 bis 4 entsprechenden Gestaltung angedeutet ist.

Der in den Fig. 2 bis 4 veranschaulichte nicht erfindungsgemäße Spannring 21 umschließt einen auf die Gestaltung des Spannringes 21 abgestimmten, mit 23 bezeichneten Lagerkörper. Von den Fig. 2 bis 4 zeigen die Fig. 3 und 4 die Paarung des Lagerkörpers 23 mit dem Spannring 21, und aus der Explosionsdarstellung gemäß Fig. 4 ergibt sich für den Lagerkörper 23 der nähere Aufbau, nämlich mit in Umfangsrichtung beabstanden, umfangsseitigen Tragzonen 24 und zwischen diesen liegenden umfangsseitigen Aussparungen 25. Sowohl die Tragzonen 24 wie auch die Aussparungen 25 erstrecken sich jeweils über die volle Breite des als Lagerring ausgebildeten Lagerkörpers 23, und es ist der Lagerkörper 23 im Bereich der Tragzonen 24, bevorzugt aber auch im Bereich der Aussparungen 25, wie gezeigt, bezüglich der jeweiligen Umfangsfläche nach außen ausgewölbt, derart, dass sich, wie insbesondere aus Fig. 4 ersichtlich, zur in Fig. 1 angedeuteten Äquatorialebene 18 des ringförmigen Lagerkörpers nach beiden Seiten hin abfallende Dachflächen ergeben, die entsprechend der Wölbung des Lagerkörpers 23 gekrümmt sind.

Der Spannring 21 ist kappenförmig ausgebildet und weist eine ringförmige Bodenzone 26 auf, von der sämtliche Spannfinger, die mit 27 bis 29 bezeichnet sind, ausgehen. Wie Fig. 1 in Verbindung mit Fig. 3 zeigt, bildet der Lagerkörper 23 mit dem axial aufgeschobenen Spannring 21 eine Montageeinheit, die in Erstreckungsrichtung der Spannfinger 27 bis 29 in die Lageraufnahme 16 eingeschoben wird; die Vorschubrichtung ist mit 44 angedeutet und entspricht, bezogen auf Fig. 1, der Vorschubrichtung beim Aufschieben des Spannrings 21 auf den Lagerkörper 23.

Als Montageeinheit sind der Lagerkörper 23 und der Spannring 21, wie insbesondere Fig. 3 zeigt, über die Spannfinger 27 und 28 gegeneinander festgelegt, die Spannfinger 29 dienen der Festlegung der Montageeinheit in der Lageraufnahme 16 durch radial verkrallende Abstützung zur Lagerfläche 15.

Von den den Lagerkörper 23 zum Spannring 21 festlegenden Spannfingern 27, 28 ist der Spannfinger 27 kürzer als der Spannfinger 28, der den Spannring 21 im Wesentlichen über die volle Breite übergreift und der jeweils in einer entsprechenden Aussparung 25 verläuft. Der kürzere Spannfinger 27 übergreift den Lagerkörper 23 lediglich in der zur Bodenzone 26 benachbarten umfangsseitigen Randzone der Tragzonen 24 des Lagerkörpers 23. Beide Spannfinger 27 und 28 sind endseitig etwas aufgebogen, und eine solche Aufbiegung ist für den Spannfinger 28 zur Erläuterung mit 30 bezeichnet. Übergehend zur jeweiligen Aufbiegung 30 sind die Spannfinger 27, 28 ausgehend von ihrem radialen Ansatz zur Bodenzone 26 in Richtung auf den Lagerkörper 23 eingewölbt und bilden letztlich Federarme, die beim axialen Aufschieben des Spannringes 21 auf den Lagerkörper 23 federnd nachgiebig sind und die sich im auf den Lagerkörper 23 aufgeschobenen Zustand des Spannringes 21 gegen die dachförmig gegeneinander geneigten Umfangszonen des Lagerkörpers 23 spannend anlegen, so dass der Lagerkörper 23 zum Spannring 21 drehfest, also stehend angeordnet ist, aber gegenüber dem Spannring 21 taumelnd beweglich ist. Für den kürzeren Spannfinger 27 braucht keine umfangsseitige Aussparung 25 vorgesehen sein, wenn die umfangsseitige Auswölbung des Lagerkörpers 23 groß genug ist und wenn in Berücksichtigung der Größe der zulässigen Taumelbewegung des Lagerkörpers 23 zum Spannring 21 der randseitige Spalt zwischen der Umfangsfläche der Tragzone 24 und der Lagerfläche 15 eine entsprechende radiale Weite hat.

Wird die Montageeinheit, gebildet durch den Lagekörper 23 und den diesem zugeordneten Spannring 21, so mit einer Lageraufnahme 16 gepaart, dass, wie Fig. 1 zeigt, der Lagerkörper 23 mit Spannring 21 im Bereich der kurzen Spannfinger 27 außerhalb der Lageraufnahme liegt, so sind trotz Übergriff des Spannfingers 27 über die Tragzone 24, keine spaltbedingten Begrenzungen gegeben, wie insbesondere aus Fig. 1 ersichtlich ist.

Die verkrallende Verspannung der Montageeinheit von Lagerkörper 23 und Spannring 21 erfolgt über die Spannfinger 29, die sich, entsprechend den Spannfingern 28, im Wesentlichen über die Breite des Lagerkörpers 23 erstrecken und die bezogen auf die Anordnung in der Lageraufnahme 16 am rückwärtigen, zum Boden der Lageraufnahme 16 benachbarten Bereich enden. In diesem Bereich sind die Spannfinger 29 mit einer entgegengesetzt zur Aufbiegung 30 verlaufenden, gegen den Lagerkörper 23 gerichteten Einbiegung 31 versehen und stützen sich über diese bevorzugt auf der Umfangsfläche der aufnehmenden Aussparung 25 des Lagerkörpers 23 ab, so dass sie zwischen der Einbiegung 31 und dem radialen Anschluss an die Bodenzone 26 einen Federbügel bilden. In diesem Bereich, bevorzugt nahe der Einbiegung 31, sind die Spannfinger 29 mit einer freigeschnittenen und radial nach außen ausgestellten Zunge 32 versehen, die sich ausgehend von der Einbiegung 31 in Richtung auf die Bodenzone 26 erstreckt, so dass sich eine die eingeschobene Lage des Spannringes 21 in der Lageraufnahme 16 verkrallende Abstützung zwischen der ausgestellten Zunge 32 und der Lagerfläche 15 ergibt.

Im Bereich der Tragzonen 24 ist der Lagerkörper 23 gegen die Lagerfläche 15 der Lageraufnahme 16 unmittelbar abgestützt, so dass der Spannring 21 bei dieser Ausgestaltung im Wesentlichen nur führende Funktion hat, wobei die geschilderte Ausgestaltung über den Spannring 21 aber auch eine tragende Abstützung innerhalb der Lageraufnahme 16 ermöglicht, so dass bezüglich der Zuordnung der Montageeinheit von Spannring 21 und Lagerkörper 23 zur Lageraufnahme 16 Toleranzen möglich sind.

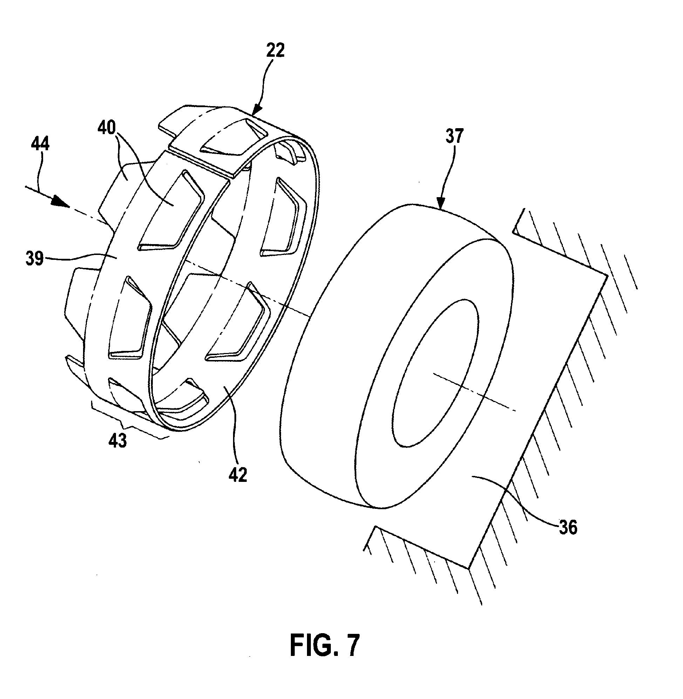

Die Fig. 5 bis 7 zeigen eine erfindungsgemäße Ausgestaltung, die ebenfalls bei einem Grundaufbau gemäß Fig. 1 zur endseitigen gelenkigen Abstützung der Welle 8 in der Lageraufnahme 16 einzusetzen ist. Diese ist bezüglich der Zuordnung zu einer solchen Lageraufnahme in Fig. 6 und 7 aber nur angedeutet ist, bei entsprechend schematischer Darstellung der zugehörigen, mit 36 bezeichneten Lageraufnahme.

Fig. 6 zeigt, analog zu Fig. 3, einen Spannring 22, der in Zuordnung zu einem Lagerkörper 37 eine Montageeinheit bildet, die analog zu Fig. 1 in einer zylindrischen, mit 36 bezeichneten Lageraufnahme anzuordnen ist.

Der Spannring 22 ist als hülsenförmiger Ringkörper gestaltet, der quer zur Umfangsrichtung geschlitzt ausgeführt ist. Der Schlitz ist mit 38 bezeichnet. Aufgrund der Schlitzung ist der Spannring radialelastisch aufzubiegen, wobei der Spannring 22 so gestaltet ist, dass er, bis auf den Schlitz 38 durchlaufend, einen ringförmigen Tragsteg 39 aufweist. Von diesem Tragsteg 39 quer zur Umfangsrichtung ausgehend sind Laschen 40 vorgesehen, die bei zur Äquatorialebene 18 überdeckend liegendem Tragsteg 39 die dachförmig gegeneinander geneigten Umfangszonen der quer zur Umfangsrichtung ausgewölbten, durchlaufenden Umfangsfläche des Lagerkörpers 37 beaufschlagen. Aufgrund dessen ist der Lagerkörper 37, wie dies für den Lagerkörper 23 über die Spannfinger 27 und 28 erreicht wird, auf seine neutrale Konstruktionslage vorgespannt, zu der taumelnde Auslenkungen des ein Gleitlager für die Welle bildenden Lagerkörpers 37 möglich sind.

Zur hülsenförmigen Grundform des Spannringes 22 sind die Laschen 40 im Ausführungsbeispiel freigeschnitten und gegenüber dem Tragsteg 39 in Richtung auf den Lagerkörper 37 eingebogen. Die hülsenförmige Grundstruktur des Spannringes 22 setzt sich einerseits des Tragsteges 39 als Verbreiterung 42 des Tragsteges 39 fort, so dass sich, bezogen auf die Montagelage in der Lageraufnahme 36, für den Spannring 22 ein in der Lageraufnahme 36 führender Ringkörper 43 ergibt, bestehend aus dem Tragsteg 39 und der Verbreiterung 42. Das Gegenstück zu der einerseits zum Tragsteg 39 gegebenen Verbreiterung 42 ist - bezogen auf den fertigungstechnischen Ausgangszustand des Spannringes 22 als aus einer Platine gebogener Hülse, insbesondere aus Federstahl - abgeschnitten oder abgeschert, so dass gegenüberliegend zur Verbreiterung 42 lediglich die Laschen 40 noch Bestandteil des Spannringes 22 sind. Grundsätzlich könnte im Rahmen der Erfindung aber, korrespondierend zur Verbreiterung 42 auf der einen Seite des Tragsteges 39, auch eine Verbreiterung der Gegenseite vorgesehen sein, was im Hinblick auf eine Führung in einer Lageraufnahme letztlich aber nur dann zweckmäßig ist, wenn die Lageraufnahme eine entsprechende Führungstiefe aufweist. Ferner liegt im Rahmen der Erfindung auch eine zu Fig. 7 umgekehrte Anordnung des den Lagerkörper 37 aufnehmenden Spannringes 22 in einer Lageraufnahme 36, als eine Anordnung der Verbreiterung auf der vom Boden der Lageraufnahme 36 abgewandten Seite.

Fig. 7 veranschaulicht, dass bei der Montage zunächst der quer zur Umfangsrichtung ballige, als Ringkörper ausgestaltete Lagerkörper 37 unter Aufweitung des Spannringes 22 in diesem angeordnet wird, wobei der seitlich von einer der Seiten eingeschobene Lagerkörper 37 im Bereich der Äquatorialebene 18 überdeckend zum Tragsteg 39 zu liegen kommt, der, wie Fig. 6 zeigt, mit der Verbreiterung 42 einen Teil eines Führungskäfigs bildet, bei dem der Tragsteg 39 die unmittelbare Abstützung des Lagerkörpers 37 gegenüber der Lagerfläche der Lageraufnahme 36 übernimmt. Somit ist bei dieser Ausgestaltung der Lagerkörper 37 über den Tragsteg 39 gegebenenfalls ummittelbar formschlüssig gegen die Lagerfläche der Lageraufnahme 36 abgestützt. Ergeben sich Toleranzen, so ist einerseits der Lagerkörper 37 über die Laschen 40 zentrierend gehalten, und andererseits aber aufgrund der federnden Abstützung der Laschen 40 zum Lagerkörper 37 der Spannring 22 insbesondere im Bereich seines Tragsteges 39 gegen die Lagerfläche der Lageraufnahme 36 verspannt. Fig. 7 veranschaulicht schematisiert, dass der Lagerkörper 37 unter Aufweitung des Spannringes 22 in diesem montiert wird und dass die so gebildete, in Fig. 6 dargestellte Montageeinheit in die Lageraufnahme 36 eingeschoben wird, bezogen auf Fig. 7 in Richtung des Pfeiles 44. Im Rahmen der Erfindung kann die Montageeinheit aus Spannring 22 und Lagerkörper 37 auch bei bezogen auf die Einschubrichtung 44 in Fig. 7 umgekehrter Lage der Verbreiterung 42 in die Aufnahme 36 eingeschoben werden, so dass eine Anpassung an die jeweiligen Baugegebenheiten möglich ist. Bei dieser zum Boden der Lageraufnahme 36 abgelegenen Lage der Verbreiterung 42 ergibt sich ein einfacherer Zugriff auf die Verbreiterung 42 sowie aufgrund der Neigung der Laschen 40 nach radial innen auch eine Einfädelschräge, die die Montage in der Lageraufnahme 36 erleichtert.

Unter Verwendung eines Spannringes 19, bevorzugt eines wie der nicht erfindungsgemäße Spannring 21 oder der erfindungsgemäße Spannring oder 22 gestalteten Spannringes 19, kann somit ein Gelenklager 11 in einer zylindrischen Lageraufnahme 16 angeordnet werden, entsprechend einem als Radiallager mit zylindrischer äußerer Umfangsfläche, das in Form eines Rollen- oder Wälzlagers oder eines Gleitlagers drehbar eine Welle oder Achse aufnimmt.

Die unsymmetrische Ausbildung des nicht erfindungsgemäßen Spannringes 22 lässt sich auch nutzen, um bezogen auf die Montageeinheit eine Einbaurichtung und Einbaulage vorzugeben, die sich einfach im Wege der Sichtkontrolle überprüfen lässt.

## Patentansprüche

1. Befestigungsanordnung für ein Gelenklager, insbesondere Kalottenlager, mit einer Lageraufnahme und einem relativ hierzu stehenden Lagerkörper, dessen Umfangsfläche quer zur seiner Umfangsrichtung ausgewölbt ist und der von der Lageraufnahme umschlossen wird,
wobei die Umfangsfläche des Lagerkörpers 37) und die Lagerfläche der Lageraufnahme (36) in ihrem quer zur Umfangsrichtung sich erstreckenden Längsverlauf voneinander abweichen und ein zwischen den Lagerkörpern ( 37) und die Lageraufnahme (36) hineinragender und gegen diese abgestützter Spannring (22) vorgesehen ist, und die Umfangsfläche des Lagerkörpers (37) zur Laserfläche der Lageraufnahme (36) Untermaß aufweist und über einen Teil des Spannringes (22) auf der Lagerfläche der Lageraufnahme (36) tragend abgestützt ist, und der Spannring (22) quer zur Umfangsrichtung mittels eines Schlitzes (38) geschlitzt und aufweitbar ausgebildet ist, **dadurch gekennzeichnet dass** der Spannring (22) gegen gegeneinander geneigte Umfangszonen der ausgewölbten Umfangsfläche des Lagerkörpers (37) ausgestellte und abgestützte Laschen (40) aufweist, wobei der Spannring (22) so gestattet ist, dass er, einen bis auf den Schlitz (38) durchlaufend, eine Äquatorialebene (18) des Lagerkörpers (37) überdeckend liegenden ringförmigen Tragsteg (39) aufweist, wobei von dem Tragsteg (39) beidseitig quer zur Umfangsrichtung ausgehend die Laschen (40) vorgesehen sind.

2. Befestigungsanordnung nach Anspruch 1,
**dadurch gekennzeichnet, dass** die Lageraufnahme (16, 36) eine zylindrische Lagerfläche (15) aufweist.

3. Befestigungsanordnung nach Anspruch 1 oder 2,
**dadurch gekennzeichnet, dass** die Umfangsfläche des Lagerkörpers (37) über einen Teil des Spannringes (22) auf der Lagerfläche der Lageraufnahme (16, 36) formschlüssig abgestützt ist.

4. Befestigungsanordnung nach Anspruch 1,
**dadurch gekennzeichnet, dass** die Neigung der Laschen (40) nach radial innen eine Einfädelschräge bildet, die die Montage in der Lageraufnahme (36) erleichtert.

5. Befestigungsanordnung nach Anspruch 1,
**dadurch gekennzeichnet, dass** der Lagerkörper (37) über die Laschen (40) des Spannringes (22) geführt und/oder getragen ist.

6. Befestigungsanordnung nach Anspruch 1 oder 5,
**dadurch gekennzeichnet, dass** die Laschen (40) von dem zwischen der Umfangsfläche und der Lagerfläche liegenden und beaufschlagten Teil des Spannringes als Tragsteg (39) ausgehen.

7. Befestigungsanordnung nach Anspruch 1,
**dadurch gekennzeichnet, dass** der Tragsteg (39) einen endseitigen Randabschnitt des in Hülsenform ausgebildeten Spannringes (22) bildet.

8. Befestigungsanordnung nach einem der hervorgehenden Ansprüche,
**dadurch gekennzeichnet, dass** der Spannring (21, 22) als einstückiger Federstahlring ausgebildet ist.

9. Verfahren zur Herstellung einer Befestigungsanordnung nach einem der hervorgehenden Ansprüche,
**dadurch gekennzeichnet, dass** der Lagerkörper (37) unter Aufweitung des Spannringes (22) in diesem montiert wird, und dass die so gebildete Montageeinheit in die Lageraufnahme (36) eingeschoben wird.

## Claims

1. Fastening arrangement for a tilting bearing, in particular spherical cap bearing, having a bearing receptacle and having a bearing body which is static relative thereto and whose circumferential surface is arched outward perpendicular to its circumferential direction and which is enclosed by the bearing receptacle, wherein the circumferential surface of the bearing body (37) and the bearing surface of the bearing receptacle (36) differ from one another in terms of their longitudinal profile extending perpendicular to the circumferential direction, and a clamping ring (22) is provided which extends in between the bearing bodies (37) and the bearing receptacle (36) and which is supported against these, and the circumferential surface of the bearing body (37) has an undersize with respect to the bearing surface of the bearing receptacle (36) and is supported in load-bearing fashion on the bearing surface of the bearing receptacle (36) via a part of the clamping ring (22), and the clamping ring (22) is designed so as to be slotted perpendicular to the circumferential direction by means of a slot (38) and expandable, **characterized in that** the clamping ring (22) has lugs (40) which are turned out towards and supported against circumferential zones, which are inclined with respect to one another, of the outwardly arched circumferential surface of the bearing body (37), wherein the clamping ring (22) is designed so as to have an annular load-bearing web (39) which runs continuously with the exception of the slot (38) and which lies so as to overlap an equatorial plane (18) of the bearing body (37), wherein the lugs (40) are provided so as to extend perpendicular to the circumferential direction from both sides of the load-bearing web (39).

2. Fastening arrangement according to Claim 1, **characterized in that** the bearing receptacle (16, 36) has a cylindrical bearing surface (15).

3. Fastening arrangement according to Claim 1 or 2, **characterized in that** the circumferential surface of the bearing body (37) is supported in a positively locking manner on the bearing surface of the bearing receptacle (16, 36) via a part of the clamping ring (22).

4. Fastening arrangement according to Claim 1, **characterized in that** the radially inward inclination of the lugs (40) forms a thread-in chamfer which facilitates mounting in the bearing receptacle (36).

5. Fastening arrangement according to Claim 1, **characterized in that** the bearing body (37) is guided and/or borne by means of the lugs (40) of the clamping ring (22).

6. Fastening arrangement according to Claim 1 or 5, **characterized in that** the lugs (40) extend from that part of the clamping ring which is situated between the circumferential surface and the bearing surface and which is subjected to load, which part serves as a load-bearing web (39).

7. Fastening arrangement according to Claim 1, **characterized in that** the load-bearing web (39) forms an end edge portion of the sleeve-shaped clamping ring (22).

8. Fastening arrangement according to one of the preceding claims, **characterized in that** the clamping ring (21, 22) is formed as a single-piece spring steel ring.

9. Method for producing a fastening arrangement according to one of the preceding claims, **characterized in that** the bearing body (37) is mounted in the clamping ring (22) such that the latter is expanded, and **in that** the assembled unit thus formed is pushed into the bearing receptacle (36).

## Revendications

1. Système de fixation pour un palier d'articulation, en particulier un palier sphérique avec un logement de palier et un corps de palier disposé par rapport à celui-ci, dont la surface périphérique est cintrée transversalement à sa direction périphérique, et qui est entouré par le logement de palier,
la surface périphérique du corps de palier (37) et la surface de palier du logement de palier (36) s'écartant l'une de l'autre dans leur allure longitudinale s'étendant transversalement à la direction périphérique et une bague de serrage (22) pénétrant entre les corps de palier (37) et le logement de palier (36) et supportée contre ceux-ci étant prévue, et la surface périphérique du corps de palier (37) présentant un sous-dimensionnement par rapport à la surface de palier du logement de palier (36) et étant supportée de manière portante par le biais d'une partie de la bague de serrage (22) sur la surface de palier du logement de palier (36), et la bague de serrage (22) étant fendue transversalement à la direction périphérique au moyen d'une fente (38) et étant réalisée de manière à pouvoir être écartée, **caractérisé en ce que** la bague de serrage (22) présente des pattes (40) supportées et orientées vers des zones périphériques inclinées l'une vers l'autre de la surface périphérique cintrée du corps de palier (37), la bague de serrage (22) étant configurée de telle sorte qu'elle présente une nervure de support (39) de forme annulaire, continue à l'exception de la fente (38), recouvrant un plan équatorial (18) du corps de palier (37), les pattes (40) étant prévues de manière à s'étendre depuis la nervure de support (39) de chaque côté transversalement à la direction périphérique.

2. Système de fixation selon la revendication 1, **caractérisé en ce que** le logement de palier (16, 36) présente une surface de palier cylindrique (15).

3. Système de fixation selon la revendication 1 ou 2, **caractérisé en ce que** la surface périphérique du corps de palier (37) est supportée par engagement positif par le biais d'une partie de la bague de serrage (22) sur la surface de palier du logement de palier (16, 36).

4. Système de fixation selon la revendication 1, **caractérisé en ce que** l'inclinaison des pattes (40) radialement vers l'intérieur forme un biseau d'enfilage, qui facilite le montage dans le logement de palier (36).

5. Système de fixation selon la revendication 1, **caractérisé en ce que** le corps de palier (37) est guidé et/ou porté par le biais des pattes (40) de la bague de serrage (22).

6. Système de fixation selon la revendication 1 ou 5, **caractérisé en ce que** les pattes (40) partent depuis la partie de la bague de serrage servant de nervure de support (39) sollicitée et située entre la surface périphérique et la surface de palier.

7. Système de fixation selon la revendication 1, **caractérisé en ce que** la nervure de support (39) forme une portion de bord du côté de l'extrémité de la bague de serrage (22) réalisée sous forme de douille.

8. Système de fixation selon l'une quelconque des revendications précédentes, **caractérisé en ce que** la bague de serrage (21,22) est réalisée sous forme de bague d'une seule pièce en acier à ressort.

9. Procédé de fabrication d'un système de fixation selon l'une quelconque des revendications précédentes,
**caractérisé en ce que** le corps de palier (37) est monté dans la bague de serrage (22) en écartant cette dernière, et **en ce que** l'unité de montage ainsi formée est enfoncée dans le logement de palier (36).
